# EUROPEAN PATENT APPLICATION

(11) **EP 4 497 928 A1**
(43) Date of publication of application: **29.01.2025**
(21) Application number: 24190655.1
(22) Date of filing: 24.07.2024
(51) Int. Cl.: F02D 19/06, F02D 19/08, F02D 41/00, F02D 41/40

(54) **ENGINE APPARATUS**

(30) Priority: 27.07.2023 JP 2023122533
(71) Applicant: Yanmar Holdings Co., Ltd., Osaka-shi, Osaka (JP)
(72) Inventor: TENTORA, Takafumi, Osaka (JP); MORITA, Gin, Osaka (JP); MATSUNAGA, Daichi, Osaka (JP); TAKEMOTO, Toru, Osaka (JP); KAMINO, Takafumi, Osaka (JP)
(74) Representative: Dennemeyer & Associates S.A.

(57) **Abstract**

[Problem] Provided is an engine apparatus which can be operated while abnormal combustion is avoided when a gaseous fuel and a liquid fuel are inputted.

[Solution] In an engine apparatus 1 which is driven by at least one of a gaseous fuel and a liquid fuel being inputted into a combustion chamber 12a, a dangerous region where abnormal combustion is predicted is preset with respect to the mixed combustion ratio of the gaseous fuel contained in fuels which are inputted into the combustion chamber 12a, and the dangerous region is avoided when an engine 2 is operated. For example, in the engine apparatus 1, when the engine 2 is operated while the mixed combustion ratio is changed, an avoidance control which avoids the dangerous region is executed. For example, in the engine apparatus 1, the dangerous region is preset in a relation between the engine load and the mixed combustion ratio of the gaseous fuel.

## Description

### TECHNICAL FIELD

The present invention relates to an engine apparatus which is driven by at least one of a gaseous fuel and a liquid fuel being inputted into a combustion chamber.

### BACKGROUND ART

Conventionally, engine apparatuses include a one which is driven by at least one of a gaseous fuel such as hydrogen and a liquid fuel such as light oil and heavy oil being inputted into a combustion chamber in a cylinder.
For example, engine apparatuses include a one which is operated by any one of operation modes: a gas mode in which it is driven by a gaseous fuel being inputted into a combustion chamber; and a diesel mode in which it is driven by a liquid fuel being inputted into the combustion chamber. For such an engine apparatus, when the operation mode is changed between the gas mode and the diesel mode, the mixed combustion ratio of the gaseous fuel contained in the fuels which are inputted into the combustion chamber is changed.
Moreover, engine apparatuses include a one which is driven by, as another operation mode, a mixed combustion mode in which it is driven by both a gaseous fuel and a liquid fuel being inputted into a combustion chamber.

For example, for an engine apparatus disclosed in Patent Document 1, when one of a gas mode and a diesel mode is switched to the other, the amount of a supplied first fuel which is inputted with the post-switch operation mode is increased to a switch threshold by an increase control where the first fuel is monotonously increased, and then is controlled by a speed governing control based on an engine rotational frequency.

Further, an operation control apparatus of an internal combustion engine disclosed in Patent Document 2 comprises: a fuel property estimation part which estimates the component ratio of fuels supplied to the internal combustion engine; and an operation restriction part which defines, based on the component ratio of fuels estimated by the fuel property estimation part, an operation region where abnormal combustion may occur in the internal combustion engine, and restricts the operation of the internal combustion engine in the operation region where abnormal combustion may occur in the internal combustion engine. Here, the component ratio of fuels is a ratio of butane and propane contained in a liquefied petroleum gas.

### PRIOR ART DOCUMENT

### PATENT DOCUMENT

Patent Document 1: Japanese Patent No. 6594714
Patent Document 2: Japanese Patent Laid-Open No. 2008-057500

### SUMMARY OF INVENTION

### TECHNICAL PROBLEM

For such an engine apparatus which is drivable by a gaseous fuel and a liquid fuel being inputted into a combustion chamber, when an operation mode is switched between a gas mode and a diesel mode, or when the engine apparatus is operated with a mixed combustion mode, the mixed combustion ratio of the gaseous fuel contained in the fuels which are inputted into the combustion chamber is changed to a predetermined target mixed combustion ratio. At that time, depending on the mixed combustion ratio, abnormal combustion such as preignition and knocking may occur locally at a certain region in an engine; however, it is difficult to avoid such abnormal combustion in the prior art.

The present invention is intended to provide an engine apparatus which can be operated while abnormal combustion is avoided when a gaseous fuel and a liquid fuel are inputted.

### SOLUTION TO PROBLEM

To solve the above-mentioned problem, an engine apparatus of the present invention is an engine apparatus which is driven by at least one of a gaseous fuel and a liquid fuel being inputted into a combustion chamber, wherein a dangerous region where abnormal combustion is predicted is preset with respect to the mixed combustion ratio of the gaseous fuel contained in the fuels which are inputted into the combustion chamber, and the dangerous region is avoided when an engine is operated.

### ADVANTAGEOUS EFFECTS OF INVENTION

According to the present invention, provided is an engine apparatus which can be operated while abnormal combustion is avoided when a gaseous fuel and a liquid fuel are inputted.

### BRIEF DESCRIPTION OF DRAWINGS

FIG. 1 is a left side view illustrating an engine apparatus according to an embodiment of the present invention.
FIG. 2 is a graph illustrating a relation between the mixed combustion ratio of a gaseous fuel and the highest pressure in a combustion chamber, in the engine apparatus.
FIG. 3 is a graph illustrating a relation between the mixed combustion ratio of the gaseous fuel and the frequency of preignition, in the engine apparatus.
FIG. 4 is a graph illustrating a dangerous region map showing a dangerous region with respect to a relation between the mixed combustion ratio of the gaseous fuel and the engine load, in the engine apparatus according to the embodiment of the present invention.
FIG. 5 is a graph illustrating a dangerous region map showing a dangerous region with respect to a relation between the mixed combustion ratio of the gaseous fuel and the engine load, in the engine apparatus according to a first variant example of the present invention.
FIG. 6 is a graph illustrating a relation between the mixed combustion ratio of the gaseous fuel, and the highest temperature in the combustion chamber and the air excess ratio of the gaseous fuel, in the engine apparatus.

### DESCRIPTION OF EMBODIMENTS

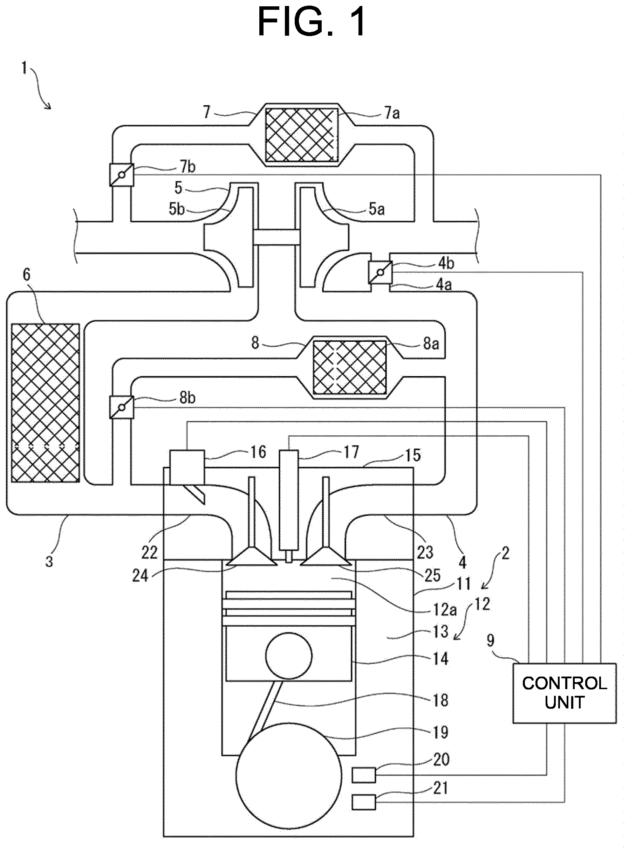

An engine apparatus 1 which is an embodiment of the present invention will be described with reference to drawings. As shown in FIG. 1, the engine apparatus 1 comprises an engine 2, an intake passage 3, an exhaust passage 4, a turbocharger 5, an intercooler 6, a first recirculation apparatus 7, a second recirculation apparatus 8 and a control unit 9.

In this embodiment, particularly, the engine apparatus 1 is configured to be drivable by a gaseous fuel such as hydrogen and a liquid fuel such as light oil and heavy oil being inputted into a combustion chamber 12a in the engine 2, and comprises a gaseous fuel injection part 16 for the gaseous fuel being inputted and a liquid fuel injection part 17 for the liquid fuel being inputted. The engine apparatus 1 is configured to be operated by switching any one of operation modes: a gas mode where it is driven by the gaseous fuel being inputted into the combustion chamber 12a; and a diesel mode where it is driven by the liquid fuel being inputted into the combustion chamber 12a.

The engine 2 is configured with a plurality of cylinder parts 12 in a cylinder block 11, but only one cylinder part 12 is shown in FIG. 1. As shown in FIG. 1, each cylinder part 12 consists of a cylinder 13, a piston 14 and a cylinder head 15. With respect to each cylinder part 12, the gaseous fuel injection part 16 and the liquid fuel injection part 17 are provided.

The cylinder 13 is cylindrically formed in the cylinder block 11, and the piston 14 is slidably housed in the cylinder 13, for example. The cylinder head 15 is mounted on the upside of the cylinder 13, and the combustion chamber 12a is internally formed by the cylinder 13 and the cylinder head 15.

Below the cylinder 13, a crank shaft 19 is coupled to the piston 14 via a connecting rod 18, and the reciprocating motion of the piston 14 is converted into the rotational motion of the crank shaft 19.

In the cylinder 13, there is provided a rotational frequency sensor 20 such as an encoder for detecting the rotational frequency of the crank shaft 19, i.e., the rotational frequency of the engine 2, and the rotational frequency sensor 20 sends the detected result to the control unit 9. In the cylinder 13, there is provided a torque sensor 21 for detecting the engine load (engine torque) of the engine 2 in the vicinity of the crank shaft 19, and the torque sensor 21 sends the detected result to the control unit 9.

Moreover, the cylinder head 15 has an intake port 22 and an exhaust port 23 which are communicated to the combustion chamber 12a of the cylinder 13, and comprises an intake valve 24 and an exhaust valve 25 which respectively open and close the intake port 22 and the exhaust port 23 with respect to the combustion chamber 12a.

The intake port 22 is connected to the intake passage 3 to introduce air supplied from the intake passage 3 into the combustion chamber 12a, and the exhaust port 23 is connected to the exhaust passage 4 to discharge exhaust gas generated in the combustion chamber 12a into the exhaust passage 4. Opening the intake valve 24 allows the mixed gas of the fuel gas and air to be taken into the combustion chamber 12a via the intake port 22, while opening the exhaust valve 25 allows exhaust gas generated in the combustion chamber 12a to be discharged via the exhaust port 23.

Meanwhile, in FIG. 1, an example in which the intake passage 3 and the intake port 22 are directly connected is shown; however, for the purpose of connecting the intake passage 3 and respective intake ports 22 of the plurality of cylinder parts 12, an intake manifold having a branch flow path which branches from the intake passage 3 to the plurality of cylinder parts 12 may be provided between the intake passage 3 and the engine 2. Further, in FIG. 1, an example in which the exhaust passage 4 and the exhaust port 23 are directly connected is shown; however, when the exhaust passage 4 and respective exhaust ports 23 of the plurality of cylinder parts 12 are connected, an exhaust manifold having a branch flow path which branches from the exhaust passage 4 to the plurality of cylinder parts 12 may be provided between the exhaust passage 4 and the engine 2.

In each cylinder part 12, the the gaseous fuel injection part 16 is provided in the the intake port 22, is controlled by the control unit 9, and injects the gaseous fuel supplied from a gaseous fuel tank (not shown) to the intake port 22. The mixed gas of air supplied from the intake passage 3 and the gaseous fuel supplied from the gaseous fuel tank (not shown) is supplied from the intake port 22 to the combustion chamber 12. The gaseous fuel injection part 16 is composed of a gas admission valve, a gas injector and the like, for example. In the gaseous fuel injection part 16, the injection pressure, the injection timing of the gaseous fuel, etc., are controlled by the control unit 9.

In each cylinder part 12, the liquid fuel injection part 17 is provided in the cylinder head 15, is controlled by the control unit 9, and injects the liquid fuel supplied from a liquid fuel tank (not shown) to the combustion chamber 12a which is below the cylinder head 15. The liquid fuel injection part 17 is composed of an injector and the like. In the liquid fuel injection part 17, the injection pressure, the injection timing, the injection frequency of the liquid fuel, etc., are controlled by the control unit 9.

Meanwhile, ignition at the combustion chamber 12a of each cylinder part 12 may be performed with a micro-pilot system where a small amount of the liquid fuel is injected from the liquid fuel injection part 17, or may be performed by a spark ignition system with an ignition plug provided in each cylinder part 12.

The intake passage 3 is connected to the intake port 22 of the cylinder part 12 in the engine 2 to supply compressed and cooled air to each cylinder part 12 via the intake port 22. In the intake passage 3, the turbocharger 5 and an intercooler 6 are provided in the order from the up-stream side in the intake direction.
Meanwhile, at the up-stream end in the intake direction of the intake passage 3, an air filter (not shown) that purifies and introduces fresh air may be provided.

The exhaust passage 4 is connected to the exhaust port 23 of each cylinder part 12 in the engine 2 to discharge exhaust gas generated in each cylinder part 12 via the exhaust port 23. In the exhaust passage 4, there is provided an exhaust bypass flow path 4a that communicates the upper-stream side and the lower-stream side in the exhaust direction than the turbocharger 5, and in the exhaust bypass flow path 4a, there is provided an exhaust bypass valve 4b for adjusting the flow rate of exhaust gas.

The exhaust bypass valve 4b is controlled by the control unit 9 and its degree of opening is regulated, and depending on the degree of opening of the exhaust bypass valve 4b, the flow rate of exhaust gas flowing into the turbocharger 5 is regulated, which allows the amount of air compressed by the turbocharger 5 to be regulated. In other words, by regulating the degree of opening of the exhaust bypass valve 4b, the flow rate of air supplied from the intake passage 3 to the intake port 22 can be regulated.

The turbocharger 5 compresses air flowing through the intake passage 3 to pump it out to the low-stream side in the intake direction, and the intercooler 6 cools air compressed at the turbocharger 5. The turbocharger 5 has a turbine 5a and a compressor 5b. The turbine 5a is arranged in the exhaust passage 4, and the compressor 5b is arranged in the intake passage 3. The turbine 5a is rotated by exhaust gas flowing through the exhaust passage 4, and the compressor 5b is driven by the rotational force of the turbine 5a, whereby air flowing through the intake passage 3 is compressed.

The first recirculation apparatus 7 recirculates exhaust gas flowing through the exhaust passage 4 to supply it to the intake passage 3. The first recirculation apparatus 7 is connected to the exhaust passage 4 at the lower-stream side in the exhaust direction than the turbocharger 5 (turbine 5a), and is connected to the intake passage 3 at the upper-stream side in the intake direction than the turbocharger 5 (compressor 5b).

The first recirculation apparatus 7 is configured with a first recirculation cooler 7a and a first recirculation valve 7b, for example. The first recirculation apparatus 7 recirculates exhaust gas flowing through the exhaust passage 4 at the lower-stream side in the exhaust direction than the turbocharger 5 while it is cooled by the first recirculation cooler 7a, and supplies it to the intake passage 3 at the upper-stream side in the intake direction than the turbocharger 5. The first recirculation valve 7b is controlled by the control unit 9 and its degree of opening is regulated, and depending on the degree of opening of the first recirculation valve 7b, the flow rate of the recirculated exhaust gas flowing into the intake passage 3 is regulated, which allows the amount of oxygen in air flowing through the intake passage 3 to be regulated.

The second recirculation apparatus 8 recirculates exhaust gas flowing through the exhaust passage 4 to supply it to the intake passage 3. The second recirculation apparatus 8 is connected to the exhaust passage 4 at the upper-stream side in the exhaust direction than the turbocharger 5 (turbine 5a), and is connected to the intake passage 3 at the lower-stream side in the intake direction than the intercooler 6.

The second recirculation apparatus 8 is configured with a second recirculation cooler 8a and a second recirculation valve 8b, for example. The second recirculation apparatus 8 recirculates exhaust gas flowing through the exhaust passage 4 at the upper-stream side in the exhaust direction than the turbocharger 5 while it is cooled by the second recirculation cooler 8a, and supplies it to the intake passage 3 at the lower-stream side in the intake direction than the intercooler 6. The second recirculation valve 8b is controlled by the control unit 9 and its degree of opening is regulated, and depending on the degree of opening of the second recirculation valve 8b, the flow rate of the recirculated exhaust gas flowing into the intake passage 3 is regulated, which allows the amount of oxygen in air flowing through the intake passage 3 to be regulated.

The control unit 9 is a computer such as ECU (Engine Control Unit) for controlling the operation of the engine 2, comprises CPU, ROM, RAM and the like, and is configured to control each part of the engine 2. The control unit 9 stores various kinds of programs for controlling the engine 2, and may be set to read and execute the programs in order to control the engine 2.

Incidentally, the engine apparatus 1 is operable by switching any one of operation modes: a gas mode in which it is driven by a gaseous fuel being inputted into the combustion chamber 12a; and a diesel mode in which it is driven by a liquid fuel being inputted into the combustion chamber 12a. The control unit 9 switches the operation mode automatically according to the load of the engine 2 and the like, or switches it according to an operation by a user.

In the gas mode, a fuel inputted into the combustion chamber 12a is a gaseous fuel which is injected by the gaseous fuel injection part 16, but a very small amount of the liquid fuel by the liquid fuel injection part 17 as an ignition agent is also contained; that is to say, the mixed combustion ratio of the gaseous fuel which is contained in the fuels inputted into the combustion chamber 12a comes to approximately 100%. In the diesel mode, a fuel inputted into the combustion chamber 12a is a liquid fuel which is injected by the liquid fuel injection part 17; that is to say, the mixed combustion ratio of the gaseous fuel which is contained in the fuels inputted into the combustion chamber 12a comes to 0%.

At this moment, for the duration between the start of switching the operation mode from the diesel mode to the gas mode and the completion of switching the operation mode, the control unit 9 controls the ratio of the liquid fuel in the fuels which are inputted into the combustion chamber 12a so that it gradually reduces from 100% to 0%, and controls the ratio of the gaseous fuel so that it gradually increases from 0% to 100%; namely, it controls the mixed combustion ratio of the gaseous fuel.

Moreover, for the duration between the start of switching the operation mode from the gas mode to the diesel mode and the completion of switching the operation mode, the control unit 9 controls the ratio of the liquid fuel in the fuels which are inputted into the combustion chamber 12a so that it gradually increases from 0% to 100%, and controls the ratio of the gaseous fuel so that it gradually reduces from 100% to 0%; namely, it controls the mixed combustion ratio of the gaseous fuel.

In other words, while the operation mode is switched between the gas mode and the diesel mode, in the fuels inputted into the combustion chamber 12a, the gaseous fuel and the liquid fuel are present in a mixed manner.

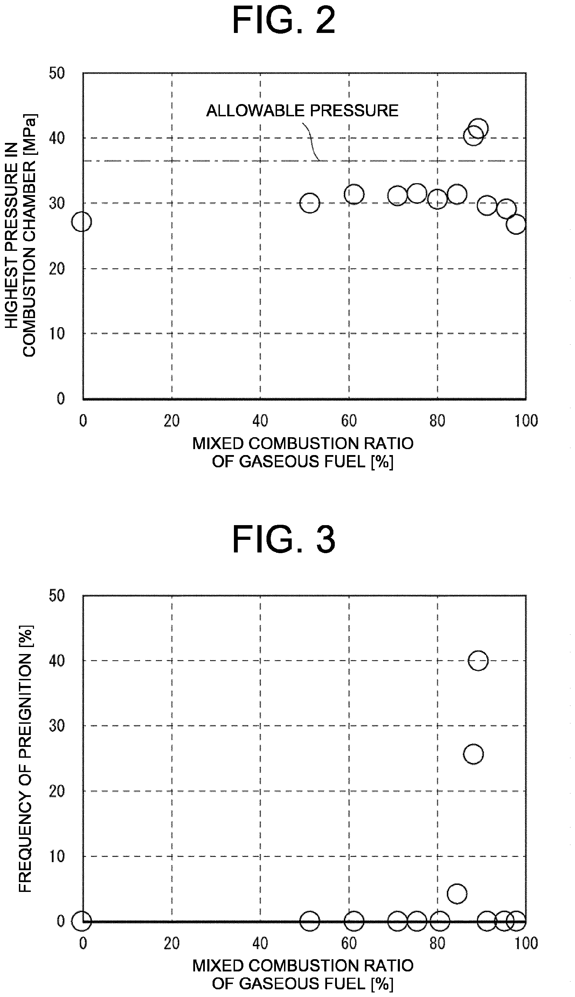

FIG. 2 is a graph showing the highest pressure in the combustion chamber 12a measured when the mixed combustion ratio of the gaseous fuel is changed at a constant engine load, and FIG. 3 is a graph showing the frequency of preignition detected when the mixed combustion ratio of the liquid fuel is changed at a constant engine load. According to these graphs, when the mixed combustion ratio is in a predetermined region, the highest pressure in the combustion chamber 12a tends to be higher than the allowable pressure, and the frequency of preignition tends to be relatively frequent, so that such a region can be set as a dangerous region where abnormal combustion such as preignition and knocking of the engine 2 is predicted.

Therefore, when the engine 2 is driven while the mixed combustion ratio of the gaseous fuel is changed at a constant engine load, the control unit 9 executes an avoidance control which avoids the dangerous region when the operation mode is switched, for example.

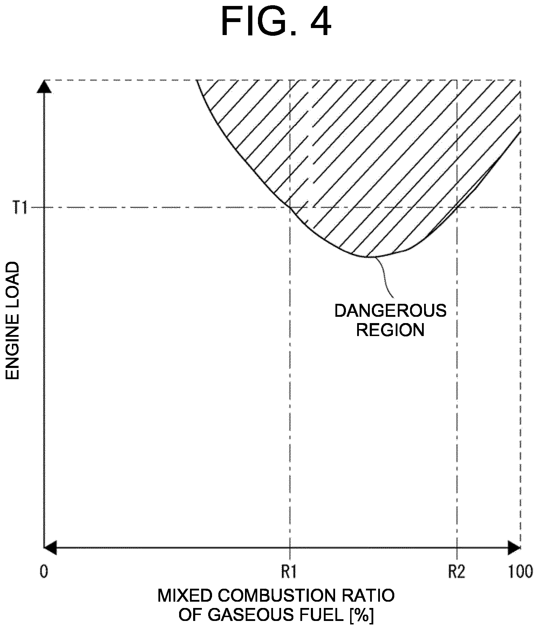

In the engine apparatus 1, for such a change in the mixed combustion ratio of the gaseous fuel, the dangerous region where abnormal combustion is predicted is preset and stored in the control unit 9. For example, as shown in FIG. 4, a dangerous region map is preset and stored in the control unit 9, which shows the dangerous region where abnormal combustion is predicted when the mixed combustion ratio of the gaseous fuel is changed at a constant engine load. Meanwhile, the control unit 9 may previously store the dangerous region map for each of various operation environments such as the temperature of air taken into the engine 2 (the environmental temperature in the engine apparatus 1) and the oxygen excess ratio (the ratio of oxygen in air according to the environmental altitude of the engine apparatus 1 such as a low-lying area or a high-lying area).

As the avoidance control which avoids the above-described dangerous region, when the mixed combustion ratio of the gaseous fuel is changed, the control unit 9 restricts the change in the mixed combustion ratio based on the above-described dangerous region map in order for the mixed combustion ratio not to enter the dangerous region. For example, when the operation mode is switched at a predetermined engine load, the control unit 9 refers to the dangerous region map to decide whether the dangerous region for the mixed combustion ratio of the gaseous fuel which corresponds to said engine load is present or not. At this time, the control unit 9 detects the engine load by the torque sensor 21. In addition, the control unit 9 detects an operation environment such as the temperature of air and the oxygen excess ratio, and obtains and refers to the dangerous region map in accordance with the operation environment of the detected result.

As a result of the above decision, when decided that the dangerous region was not present, the control unit 9 may switch the operation mode completely without executing the avoidance control. On the other hand, when decided that the dangerous region was present, the control unit 9 sets, as the avoidance control, the upper limit or the lower limit of the change in the mixed combustion ratio of the gaseous fuel based on the dangerous region, and controls the amount of the gaseous fuel injected by the gaseous fuel injection part 16 and the amount of the liquid fuel injected by the liquid fuel injection part 17.

For example, as shown in FIG. 4, when the engine 2 is operated with a predetermined engine load T1, in a case where the diesel mode is switched to the gas mode to gradually increase the mixed combustion ratio of the gaseous fuel, because it reaches the dangerous region at a mixed combustion ratio R1, the control unit 9 sets the upper limit of change in the mixed combustion ratio of the gaseous fuel at the mixed combustion ratio R1 or lower. Also, when the gas mode is switched to the diesel mode to gradually decrease the mixed combustion ratio of the gaseous fuel, because it reaches the dangerous region at a mixed combustion ratio R2, the control unit 9 sets the lower limit of change in the mixed combustion ratio of the gaseous fuel at the mixed combustion ratio R2 or higher.

As described above, in accordance with this embodiment, the engine apparatus 1 is the engine apparatus 1 which is driven by at least one of a gaseous fuel and a liquid fuel being inputted into the combustion chamber 12a of the engine 2, wherein a dangerous region where abnormal combustion is predicted is preset with respect to the mixed combustion ratio of the gaseous fuel contained in the fuels which are inputted into the combustion chamber 12a, and an avoidance control which avoids the dangerous region is executed when the engine 2 is driven while the mixed combustion ratio is changed at a constant engine load.

In this way, when the gaseous fuel and the liquid fuel are inputted into the combustion chamber 12a, the engine apparatus 1 can be operated while abnormal combustion of the engine 2 resulting from the mixed combustion ratio of the gaseous fuel is avoided.

In addition, according to this embodiment, in the engine apparatus 1, the dangerous region is preset in a relation between the engine load and the mixed combustion ratio of the gaseous fuel.

By so doing, in the engine apparatus 1, when the engine 2 is operated with a predetermined engine load, the mixed combustion ratio of the gaseous fuel which corresponds to said engine load can be grasped so that the mixed combustion ratio of the gaseous fuel which results in the dangerous region is avoided, which allows the engine 2 to be operated while abnormal combustion of the engine 2 is avoided.

Further, according to this embodiment, in the engine apparatus 1, as the avoidance control, a change in the mixed combustion ratio of the gaseous fuel is restricted with respect to the dangerous region.

By so doing, in the engine apparatus 1, when the engine 2 is operated with a predetermined engine load, entry of the mixed combustion ratio of the gaseous fuel into a range in the dangerous region is avoided more reliably, allowing the engine 2 to be operated while the abnormal combustion of the engine 2 is avoided.

Meanwhile, in the embodiment described above, the example has been described, in which, in the engine apparatus 1, the control unit 9 restricts, as the avoidance control which avoids the dangerous region, a change in the mixed combustion ratio based on the dangerous region map in order for the mixed combustion ratio not to enter the dangerous region when the mixed combustion ratio of the gaseous fuel is changed; however, the present invention is not limited to this example.

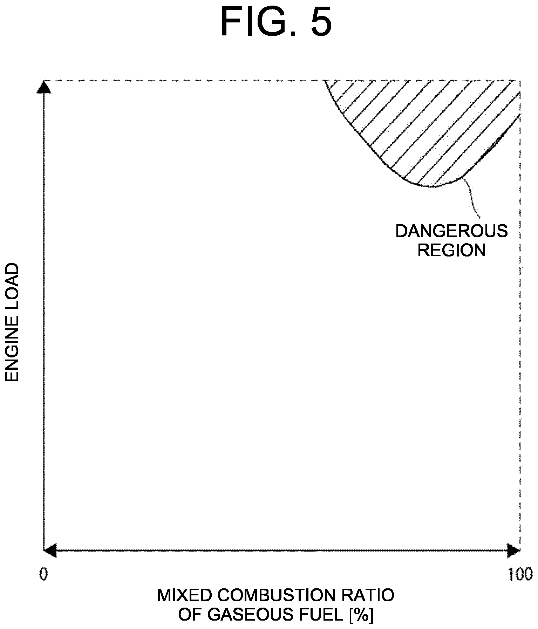

As a first variant example, the control unit 9 may also perform an avoidance control which changes an operation condition so as to cease or alleviate the dangerous region for restricting the mixed combustion ratio of the gaseous fuel. In other words, the control unit 9 controls the operation condition by changing it so as to reduce the dangerous region, and, for example, can change the operation condition with respect to the dangerous region map as shown in FIG. 4 to change it to the dangerous region map as shown in FIG. 5 where the dangerous region is reduced.

In the engine apparatus 1, when the engine 2 is operated while the mixed combustion ratio of the gaseous fuel is changed at a constant engine load, in a case where the operation mode is switched, for example, the highest temperature (combustion temperature) in the combustion chamber 12a and the air excess ratio of the gaseous fuel (the ratio of air to the gaseous fuel in the mixed gas) are changed. In the engine 2, when the highest temperature in the combustion chamber 12a becomes abnormally high, abnormal combustion is likely to occur, and when the excess air ratio of the gaseous fuel reduces and the gaseous fuel becomes rich, the mixed gas is likely to be ignited and thus abnormal combustion is likely to occur.

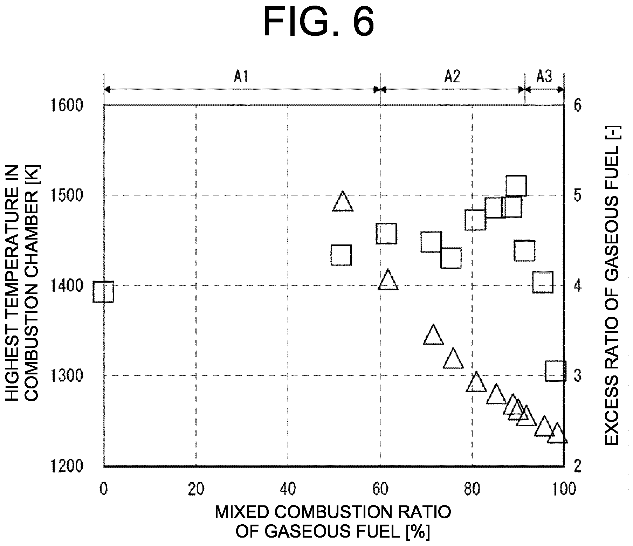

For example, FIG. 6 is a graph which shows the measured highest temperature in the combustion chamber 12a with a rectangular symbol and shows the calculated air excess ratio of the gaseous fuel with a triangular symbol when the mixed combustion ratio of the gaseous fuel is changed at a constant engine load. According to this graph, in a stable operation region A1 where the mixed combustion ratio of the gas fuel is relatively low (for example, 60% or less), because the large amount of the liquid fuel is inputted, the temperature in the combustion chamber 12a increases due to combustion by the liquid fuel; however, because the small-amount and lean gas fuel is inputted, abnormal combustion tends not to occur. In addition, in a dangerous operation region A2 whose mixed combustion ratio of the gaseous fuel becomes higher (for example, 60%-90%) than that of the stable operation region A1, because the gaseous fuel may serve like a combustion aid, the temperature in the combustion chamber 12a sharply increases due to combustion of the liquid fuel, and moreover, because the large-amount and rich liquid fuel is inputted and thus is likely to be ignited to the mixed gas, the abnormal combustion tends to occur. In addition, in a stable operation region A3 whose mixed combustion ratio of the gaseous fuel becomes higher (90% or more, for example) than that of the dangerous operation region A2, because the large-amount and rich gaseous fuel is inputted, the mixed gas is likely to be ignited; however, because the small-amount liquid fuel is inputted, combustion by the liquid fuel is slowed down so that the temperature in the combustion chamber 12a does not increase comparatively, and therefore abnormal combustion tends not to occur.

Hence, when the operation mode is switched at a predetermined engine load, the control unit 9 refers to the dangerous region map, and in a case where it decides that there is a dangerous region for the mixed combustion ratio of the gaseous fuel which corresponds to said engine load, it changes the operation condition so as to increase the highest temperature in the combustion chamber 12a and/or the air excess ratio of the gaseous fuel, whereby the dangerous region for restricting the mixed combustion ratio of the gaseous fuel may be ceased or alleviated.

For example, the control unit 9 can control, as an operation condition, the injection pressure, the injection timing, the number of injections of the liquid fuel by the liquid fuel injection part 17 and like, thereby allowing the internal temperature in the combustion chamber 12a to be controlled so that it is reduced. In addition, the control unit 9 can control, as an operation condition, the injection pressure, the injection timing of the gaseous fuel by the gaseous fuel injection part 16, etc., thereby allowing the internal temperature in the combustion chamber 12a to be controlled so that it is reduced. Further, while the control unit 9 can detect the rotational frequency of the engine 2 by the rotational frequency sensor 20 to calculate engine power based on the rotational frequency of the engine 2, it can control, by means of a feedback control of said engine power, the internal temperature in the combustion chamber 12a and the excess air ratio of the gaseous fuel so that they are increased.

Meanwhile, the control unit 9 may change at least one of, or two or more in combination of the injection pressure of the liquid fuel, the injection timing of the liquid fuel, the number of injections of the liquid fuel, the injection pressure of the gaseous fuel, the injection timing of the gaseous fuel, and engine power.

Further, the control unit 9 controls the turbocharger 5, the intercooler 6, the first recirculation apparatus 7, the second recirculation apparatus 8, the exhaust bypass valve 4b, the intake valve 24, etc., in order to, as an operation condition, reduce the intake air temperature in the combustion chamber 12a, raise the intake air pressure, increase the amount of intake air, or raise the specific heat of intake air, thereby allowing the internal temperature in the combustion chamber 12a and the air excess ratio of the gaseous fuel to be controlled so that they are increased.

Meanwhile, the control unit 9 may change at least one of, or two or more in combination of the intake air temperature in the combustion chamber 12a, the intake air pressure in the combustion chamber 12a, the amount of intake air in the combustion chamber 12a, and the specific heat of intake air in the combustion chamber 12a.

For example, the control unit 9 controls the flow rate of air passing through the intercooler 6, controls the open and close timing of the intake valve 24, or controls the amount of cooled water or the amount of lubricating oil in order to reduce the temperature of air which is supplied from the intake passage 3 and the intake port 22 to the combustion chamber 12a to directly reduce the internal temperature in the combustion chamber 12a, which allows combustion in the combustion chamber 12a to be slowed down and abnormal combustion to be restricted.

Moreover, the control unit 9 controls the exhaust bypass valve 4b and the compressor 5b of the turbocharger 5 in order to increase the density of air which is supplied from the intake passage 3 and the intake port 22 to the combustion chamber 12a to reduce the ratio of the gaseous fuel inputted into the combustion chamber 12a, thereby allowing abnormal combustion to be restricted.

Further, the control unit 9 controls the flow rate of air passing through the intercooler 6, controls the open and close timing of the intake valve 24, or controls the exhaust bypass valve 4b or the compressor 5b of the turbocharger 5 in order to increase the amount of air which is supplied from the intake passage 3 and the intake port 22 to the combustion chamber 12a to reduce the ratio of the gaseous fuel inputted into the combustion chamber 12a, thereby allowing abnormal combustion to be restricted.

Also, the control unit 9 controls the first recirculation apparatus 7 or the second recirculation apparatus 8 or regulates humidity with water injection and the like in order to increase the specific heat of air supplied from the intake passage 3 and the intake port 22 to the combustion chamber 12a to make, for example, carbon dioxide-rich air or water vapor-rich air so as to reduce the internal temperature in the combustion chamber 12a at compression, which allows abnormal combustion to be restricted.

As described above, according to the first variant example, the engine apparatus 1 performs the avoidance control that changes, as an operation condition, at least one of the injection pressure of the liquid fuel, the injection timing of the liquid fuel, the number of injections of the liquid fuel, the injection pressure of the gaseous fuel, the injection timing of the gaseous fuel, and engine power, which allows the highest temperature in the combustion chamber 12a and/or the air excess ratio of the gaseous fuel to be increased. In addition, the engine apparatus 1 performs the avoidance control that changes, as an operation condition, at least one of the intake air temperature in the combustion chamber 12a, the intake air pressure in the combustion chamber 12a, the amount of intake air in the combustion chamber 12a, and the specific heat of intake air in the combustion chamber 12a, which allows the highest temperature in the combustion chamber 12a and/or the air excess ratio of the gaseous fuel to be increased. Accordingly, as the dangerous region which restricts the mixed combustion ratio of the gaseous fuel is ceased or alleviated to allow the dangerous region in the dangerous region map to be reduced, even when a change in the mixed combustion ratio of the gaseous fuel is restricted in order for the mixed combustion ratio of the gaseous fuel not to enter the dangerous region, a range for changing the mixed combustion ratio can be enlarged.

Moreover, as a second variant example, in a case where the mixed combustion ratio of the gaseous fuel is changed, if there is a dangerous region between the current mixed combustion ratio and the target mixed combustion ratio, the control unit 9 may perform an avoidance control which changes the mixed combustion ratio of the gaseous fuel so as to avoid (jump) the mixed combustion ratio within the dangerous region. At this time, in order to change the mixed combustion ratio of the gaseous fuel while the dangerous region is avoided, the control unit 9 may calculate the total amount of heat inputted from the liquid fuel and the gaseous fuel at the current mixed combustion ratio, and convert it into the amount of heat inputted from the liquid fuel and the gaseous fuel at the target mixed combustion ratio.

For example, as shown in FIG. 4, when the engine 2 is operated with the predetermined engine load T1, in a case where the control unit 9 switches the diesel mode to the gas mode to gradually increase the mixed combustion ratio of the gaseous fuel, the target mixed combustion ratio is 100%; however, the mixed combustion ratio reaches the dangerous region at the mixed combustion ratio R1 and the dangerous region continues as far as the mixed combustion ratio R2. At this moment, when the mixed combustion ratio of the gaseous fuel reaches the mixed combustion ratio R1 or approaches the mixed combustion ratio R1, the control unit 9 jumps the dangerous region and sets the mixed combustion ratio of the gaseous fuel at the mixed combustion ratio R2 or more, which changes the mixed combustion ratio by avoiding the mixed combustion ratio within the dangerous region.

In addition, when the control unit 9 switches the gas mode to the diesel mode to gradually decrease the mixed combustion ratio of the gaseous fuel, the target mixed combustion ratio is 0%; however, the mixed combustion ratio reaches the dangerous region at the mixed combustion ratio R2 and the dangerous region continues as far as the mixed combustion ratio R1. Then, when the mixed combustion ratio of the gaseous fuel reaches the mixed combustion ratio R2 or approaches the mixed combustion ratio R2, the control unit 9 jumps the dangerous region and sets the mixed combustion ratio of the gaseous fuel at the mixed combustion ratio R1 or less, which changes the mixed combustion ratio by avoiding the mixed combustion ratio within the dangerous region.

As described above, according to the second variant example, as the engine apparatus 1 performs the avoidance control which jumps the dangerous region to change the mixed combustion ratio of the gaseous fuel, entry of the mixed combustion ratio of the gaseous fuel into a range in the dangerous region is avoided more reliably, which allows the engine 2 to be operated while abnormal combustion of the engine 2 is avoided. Moreover, since the mixed combustion ratio of the gaseous fuel can be changed to the target mixed combustion ratio, the operation mode can be switched completely.

In addition, in the above-described embodiment, although the example was explained where the engine apparatus 1 is configured to be operated by switching any one of operation modes of: the gas mode in which it is driven by the gaseous fuel being inputted into the combustion chamber 12a; and the diesel mode in which it is driven by the liquid fuel being inputted into the combustion chamber 12a, the present invention is not limited to this example. In another example, the engine apparatus 1 may be configured to be operated, as another operation mode, by a mixed combustion mode in which it is driven by both the gaseous fuel and the liquid fuel being inputted into the combustion chamber 12a.

Note that the present invention can be properly modified within a range which does not contradict to a gist or a concept of the present invention that can be read throughout the claims and the specification, and an engine apparatus involving such modifications is also included in the technical concept of the present invention.

### [Supplementary Notes of Invention]

Hereinafter, the summary of the invention extracted from the above-described embodiments will be supplemented. Note that each configuration and each processing function described in the following supplementary notes may be selected, omitted, and combined as appropriate.

### <Supplementary Note 1>

An engine apparatus which is driven by at least one of a gaseous fuel and a liquid fuel being inputted into a combustion chamber
wherein a dangerous region where abnormal combustion is predicted is preset with respect to the mixed combustion ratio of the gaseous fuel contained in fuels which are inputted into the combustion chamber, and
the dangerous region is avoided when an engine is operated.

### <Supplementary Note 2>

The engine apparatus according to supplementary note 1, wherein when the engine is operated while the mixed combustion ratio is changed, an avoidance control which avoids the dangerous region is executed.

### <Supplementary Note 3>

The engine apparatus according to supplementary note 1 or 2, wherein the dangerous region is preset in a relation between an engine load and the mixed combustion ratio.

### <Supplementary Note 4>

The engine apparatus according to any one of supplementary notes 1-3, wherein as the avoidance control, a change in the mixed combustion ratio is restricted with respect to the dangerous region.

### <Supplementary Note 5>

The engine apparatus according to any one of supplementary notes 1-4, wherein as the avoidance control, at least one of the injection pressure of the liquid fuel, the injection timing of the liquid fuel, the number of injections of the liquid fuel, the injection pressure of the gaseous fuel, the injection timing of the gaseous fuel, and engine power is changed.

### <Supplementary Note 6>

The engine apparatus according to any one of supplementary notes 1-5, wherein as the avoidance control, at least one of the intake air temperature in the combustion chamber, the intake air pressure in the combustion chamber, the amount of intake air in the combustion chamber, and the specific heat of intake air in the combustion chamber is changed.

### <Supplementary Note 7>

The engine apparatus according to any one of supplementary notes 1-6, wherein when the mixed combustion ratio is changed, if there is the dangerous region between the current mixed combustion ratio and the target mixed combustion ratio, as the avoidance control, the mixed combustion ratio is changed by avoiding the mixed combustion ratio within the dangerous region.

### <Supplementary Note 8>

The engine apparatus according to any one of supplementary notes 1-7, wherein the gaseous fuel is hydrogen.

### REFERENCE SIGNS LIST

1 engine apparatus
2 engine
3 intake passage
4 exhaust passage
4a exhaust bypass flow path
4b exhaust bypass valve
5 turbocharger
5a turbine
5b compressor
6 intercooler
7 first recirculation apparatus
7a first recirculation cooler
7b first recirculation valve
8 second recirculation apparatus
8a first recirculation cooler
8b second recirculation valve
9 control unit
11 cylinder block
12 cylinder part
12a combustion chamber
13 cylinder
14 piston
15 cylinder head
16 gaseous fuel injection part
17 liquid fuel injection part
18 connecting rod
19 crank shaft
20 rotational frequency sensor
21 torque sensor
22 intake port
23 exhaust port
24 intake valve
25 exhaust valve

## Claims

1. An engine apparatus which is driven by at least one of a gaseous fuel and a liquid fuel being inputted into a combustion chamber
wherein a dangerous region where abnormal combustion is predicted is preset with respect to the mixed combustion ratio of the gaseous fuel contained in fuels which are inputted into the combustion chamber, and
the dangerous region is avoided when an engine is operated.

2. The engine apparatus according to claim 1, wherein when the engine is operated while a mixed combustion ratio is changed, an avoidance control which avoids the dangerous region is executed.

3. The engine apparatus according to claim 1, wherein the dangerous region is preset in a relation between an engine load and the mixed combustion ratio.

4. The engine apparatus according to claim 2, wherein as the avoidance control, a change in the mixed combustion ratio is restricted with respect to the dangerous region.

5. The engine apparatus according to claim 2, wherein as the avoidance control, at least one of an injection pressure of the liquid fuel, an injection timing of the liquid fuel, the number of injections of the liquid fuel, an injection pressure of the gaseous fuel, an injection timing of the gaseous fuel, and engine power is changed.

6. The engine apparatus according claim 2, wherein as the avoidance control, at least one of an intake air temperature in the combustion chamber, an intake air pressure in the combustion chamber, an amount of intake air in the combustion chamber, and a specific heat of intake air in the combustion chamber is changed.

7. The engine apparatus according to claim 2, wherein when the mixed combustion ratio is changed, if there is the dangerous region between the current mixed combustion ratio and the target mixed combustion ratio, as the avoidance control, the mixed combustion ratio is changed by avoiding the mixed combustion ratio within the dangerous region.

8. The engine apparatus according to claim 1, wherein the gaseous fuel is hydrogen.
